# EUROPEAN PATENT APPLICATION

(11) **EP 1 561 733 A1**
(43) Date of publication of application: **10.08.2005**
(21) Application number: 04075396.4
(22) Date of filing: 06.02.2004
(51) Int. Cl.: C04B 18/00, C04B 28/00

(54) **Construction material based upon a sludge or sludged waste material**

(71) Applicant: Stichting Geodelft, 2628 CK Delft (NL)
(72) Inventor: van der Zon, Wilhelmus Hendrikus, 2521 ZL Den Haag (NL); Molendijk, Waldo Olaf, 3335 EL Zwijndrecht (NL); van der Hoek, Eline Elisabeth, 2611 LC Delft (NL); Aantjes, Abraham Tanno, 4661 WP Halsteren (NL)
(74) Representative: Prins, Adrianus Willem, Mr. Ir.

(57) **Abstract**

The invention relates to a fluid construction mixture comprising a sludge or tailing material (such as a dredged material), a binder, a binder retarding agent, optionally one or more other ingredients. The invention further relates to a method for preparing a solid construction material and to the use of construction material in infrastructural projects.

## Description

The invention relates to a construction material based upon a sludge or tailing material, such as a dredged material.

Waterways and harbours need to be dredged regularly in order to keep them open. Material that is dredged out of the water are typically considered waste material. Traditionally the material is disposed of, without any further use.

As a result of increased ecological awareness in recent years, there is a growing interest in processing the dredged material such that it can be beneficially used.

WO 02/074391 describes a method for the treatment of dredged material wherein at elevated temperature dredged material and a lime-based binder are mixed. The lime-based binder is added under conditions that result in the reduction of the water content and the volume of the raw dredged material. After cooling, a chelating agent is added, resulting in the decontamination and solidification of the dredged material. The solid material is reported to be suitable as a filler for composite materials.

It is an object of the present invention to provide a method for preparing a construction material from sludge or tailing, without a temperature treatment to reduce the water content, material which preferably allows for a flexible use, in particular in civil engineering applications.

It has now surprisingly been found that it is possible to provide a construction mixture, based upon a sludge or tailing material, that remains fluid for a sufficiently long period in order to facilitate its application.

In particular, the present invention provides the possibility to control important parameters such as mechanical strength, bearing strength, stiffness specific weight, permeability, processibility and/or cost of a solid construction material obtainable from a fluid mixture according to the invention.

Accordingly the present invention relates to a fluid construction mixture comprising a sludge or tailing material (such as a dredged material), a binder, a binder retarding agent, and optionally one or more other components, in particular a foaming agent and/or a weighting material.

The invention further relates to a method of preparing a solid construction material from said fluid mixture, and a solid construction material obtainable by such a method.

It has been found possible to very conveniently control one or more parameters such as mentioned above.

A construction mixture or a solid construction material according to the invention has been found very suitable for providing an infrastructural element. Preferred examples of such elements are selected from the group consisting of roads, parkings, airplane-landing strips, quays, seawalls, embankments, dikes, road embankments railway embankments, dams, sound barriers and land reclamation projects.

A solid construction material according to the invention has further been found particularly suitable as ballast, in particular as ballast for a ship, counterweights at cranes or ballast material for underwater pipelines or underwater constructions.

A construction mixture according to the invention remains fluid (such that it remains pumpable or pourable) sufficiently, preferably at least 1 day, under ambient conditions, to allow flexible further processing of the material into a solid material. This allows preparation of the mixture at a different site than the site of preparing the solid material. In principle, it even allows direct use of the fluid mixture to a civil engineering application. for at least 1 day. It further allows preparing the fluid in a large master batch and providing from that batch different solid materials with different properties.

The fluid mixture may be such that it remains fluid for 4 weeks or more. In practice, it is preferred that it remains fluid for about 1 day to up to about 1 week.

The term sludge as used herein in the broadest sense is a dispersion of an particulate inorganic mineral material (in particular silica based) and water. The term sludge in particular includes dredged materials. The sludge typically contains a mud as major component. Alternatively or in addition it may comprise silt, clay, sand and/or other granular materials.

The term tailing material as used herein is defined as sludged material obtained from mining-, milling-, grinding processing or other sludged industrial waste.

Unless specified otherwise the term sludge is meant to include sludge, tailing material and dredged material.

The term ambient conditions is in particular used herein to describe the temperature of the environment wherein the materials are processed. Preferably such temperature is between about 0 and about 30 °C.

A fluid construction mixture according to the invention may be made by mixing a sludge or tailing material, a binder, a binder retarding agent and one or more optional ingredients together.

A preferred mixing procedure is mixing the sludge and retarding agent prior to mixing the binder.

Another preferred mixing procedure is mixing the sludge with the binder prior to mixing the retarding agent.

In both mixing procedures the other components will usually be added after mixing the sludge, binder and retarding agent.

A method according to the invention may very suitably be carried out under ambient conditions.

It is further an advantage that the sludge or tailing material usually need not be pre-treated before mixing the ingredients. In particular, the sludge or tailing material may be further processed without dewatering.

In case the sludge or tailing material (*e.g*. a dredged material) contains undesired macroscopic objects (*e.g*. bricks, bikes and the like, household equipment, packaging materials), these may be removed from the sludge or tailing material, prior to mixing. Such objects are preferably at least partially removed if the have a size of about 5 cm (max. diameter) or more.

Optionally, organic pollutants are removed from the sludge, the tailing material or the mixture, preferably by aerating.

The amount of sludge in the construction mixture is preferably at least about 50 % (by volume), more preferably at least about 65 % (by volume), Preferably the amount does not exceed 98 % (by volume), more preferably the amount is less than about 95 % (by volume).

The amount of binder in the mixture, is preferably at least about 50-400 kg/m³ of sludge.

In particular for use as foundation material in infrastructural applications, it is preferred that the amount of binder is at least about 75 kg/m³ sludge.

In particular for construction purposes it is preferred that the amount binder is less than about 200 kg/m³ sludge.

In principle any type of binders for inorganic materials may be used. Preferred examples of binders include fly ashes, cements and lime-based binders (such as calcium oxide, magnesium oxide silica, ferric oxide, aluminium oxide). In a preferred embodiment secondary materials (*i.e.* waste materials) are used as binders. For instance a fly ash - especially fly ash that is rich in calciumoxides - is very suitable.

In addition, a binder retarding agent is present in a mixture according to the invention. Such agent slows down or inhibits the solidification of the mixture. Suitable binder retarding agents are known in the art. Cement retarders and concrete retarders are particularly suitable. Preferred examples of binder retarding agents include polyphosphates, sulphonated naphthalenes, lignosulphonates etc..

The skilled person will know how to select a specific binder retarding agent and a suitable concentration in order to control the processibility (the period during which the mixture remains fluid) based upon common general knowledge and the information disclosed herein. Good results have been achieved with a concentration of at least about 0.1 wt. % based on the weight of the sludge. From a technical view point, the upper limit is not particularly critical. Good results have been achieved with a concentration of up to about 1 wt. % or more.

A foaming agent is preferably present, in particular in order to control the specific weight of the mixture (and the solid material that may be made thereof). The presence of a foaming agent is further useful for controlling the permeability (especially for water and/or air) of a solid construction material obtainable by solidifying a fluid mixture according to the invention

The foaming agent is preferably present in an effective amount to cause foaming of the mixture, *e.g* after mixing, aerating or *in situ* gas generation. The skilled person will know how to select a suitable concentration based upon the nature of the foaming agent, the other ingredients and the desired effect. When present, the concentration of the foaming agent is preferably at least 0.5 kg/m³ , more preferably at least 2 kg/m³.

Very good results have been achieved with a mixture comprising up to about 5 kg/m³. based on the total weight of the sludge.

The foam content may be chosen in a wide range, depending upon de desired properties. In a preferred embodiment, the foam content in the fluid mixture is up to 50 % (volume/volume), The foam content of a foamed mixture is preferably at least 20 %, although a lower content may be chosen. Foam content is defined herein as the volume percentage of gaseous phase in the mixture.

Suitable foaming agents are known in the art and include surfactants. Particularly suitable are foaming agents commonly used for foaming concrete. The foaming agent may be anionic or cationic.

Preferred foaming agents are sulfonated alkyl compounds. Very good results have been achieved with a compound selected from sulfohydroxypoly(oxy alk-diyl)-(C10 to C16)alkylethers -in particular sulfohydroxypoly(oxy-1,2-ethandiyl)-C10-C16-alkylether - and olefinsulfonates, in particular C14 to C16 olifine sulfonates. Preferably a sodium salt of a sulfonated alkyl compound is employed.

Another group of preferred foaming agents are nitrogen containing surfactants, in particular trialkylaminooxides. Very good results have been achieved with cocosalkyldimethylaminoxide.

An advantage of a mixture comprising a foam is the possibility to form a porous structure from which contaminants - which may be present in the sludge used as a starting material - can be leached out under controlled circumstances.

A weighting material is preferably present to provide a relatively high specific density.

The weighting material typically has a specific weight that is higher than the average specific weight of the total mixture (or solidified construction material). Preferably the specific weight of the weighting agent is more than 2500 kg/m³. The specific weight may be up to 5500 kg/m³ or higher. Preferred examples of weighting materials are sand, baryte, hematite and magnetite, as they have a very high specific weight. Use of such high specific weight materials is especially preferred in case of a solid construction material that is intended for use as ballast material.

In order to increase strength and/or permeability of a solidified construction material obtainable from a fluid construction mixture according to the invention, a fibrous material may be present.

For imparting extra strength fibres of metal (in particular iron/steel), polymeric fibres and glass fibres have been found very suitable.

For advantageous permeability very good results have been achieved with organic fibres - for instance wood, wool, reed or flax. - and polymeric fibres.

For realising a highly satisfactory permeability in the solidified material it has been found particularly advantageous to provide the mixture with both a foaming agent and a fibrous material. This combination has been found to enhance the occurrence of open pores in the material, contributing to the permeability of the material.

As indicated above, a fluid construction mixture according to the invention may very suitably be used for preparing a solid construction material.

Such a method typically involves solidifying the fluid construction mixture. Solidification is preferably achieved by adding a binder initiator to the fluid construction mixture. The amount of initiator may be chosen within wide limits. Preferably the binder initiator is added in an effective amount to cause solidifying within 10 seconds to 3 days after adding, under ambient conditions.

Very good results have been achieved with a method, wherein the binder initiator is added in an amount of about 25 to about 250 kg/m³ sludge. In principle any binder initiator may be used that enhances binding of the binder. Very good results have been achieved with a binder initiator selected from the group consisting of water glass and alkaline hydroxides.

Particularly preferred are sodium hydroxide, potassium hydroxide and sodium aluminates, as these materials generate a high pH, which has been found advantageous to the binding process, in particular when used in combination with a fly ash as binder.

The material may be granulated during or after solification.

The solidification may be effected in a mould, to make a shaped article (a monolyte) *e.g*. a plate, a brick or a block.

As indicated above a porous structure may in particular be provided with a foaming agent (providing gas bells that form at least part of the pores), although it is also possible to provide a porous structure in the absence of the foaming agent (due to the presence of water in the liquid mixture , that may be allowed to leak out after solidication).

The porosity may be chosen in a wide range *e.g*. between 5 and 90 %, preferably up to 75 %. A particular advantage of a porous solid construction material is the relatively low specific weight, independent of the type of the pores (closed or open/interconnected).

The porosity is preferably such that the permeability for water according to Darcy is in the range of 10⁻⁴ m/s to 10⁻¹¹ m/s. As indicated above a desired porosity and permeability may be achieved by providing the mixture from which the solid material is made with foaming agent and/or fibres.

A construction material with a porosity, imparting a permeability of less than 10⁻⁷ m/s, has been found very suitable for use as an insulating material.

An advantage of open pores is that it imparts permeability for water and/or other compounds. This is advantageous because it enables the material to be cleaned *in situ*, after its application *e.g*. in an infrastructural project. If such property is desired, the material is preferably provided with pores imparting a permeability to water of at least 10⁻⁷ m/s, more preferably at least about 10⁻⁶ m/s.

In particular when it is used in an substantially horizontal structure, (*e.g*. road works, landing strip, parking *etc*.), such a permeability may further offer the advantage of allowing rain water to migrate through the structure rather than to form pools of water on the surface.

The invention will now be illustrated by the following example

### Example 1:

A mixture with the following ingredients:
- 1 m³ sludge (dredged material)
- 150 kg Binder (CEM III/B 42,5, conform NEN-EN)
- 4 kg binder retarding agent (Addiment HMNT™ (supplyer Sica/Addiment).
were mixed for 5 minutes gave a base grout that stayed liquid for at least 48 hours

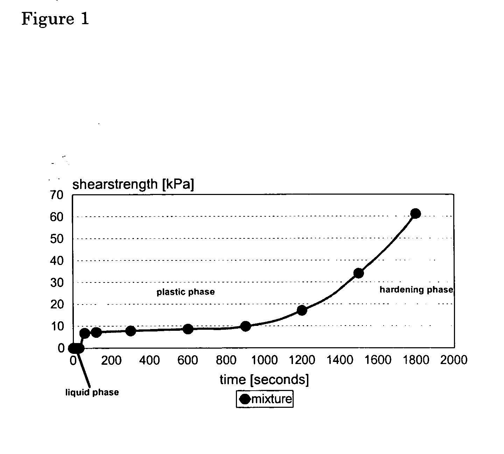

After mixing with 85 kg of Waterglass (32 %) the hardening curve, shown in Figure 1 was obtained:

Figure 1 is a typical hardening curve where the time where the mixture remains liquid for a relatively brief period of time, after adding the initiator and starts to set between 10 seconds and 30 minutes after addition thereof.

The plastic phase (where the material has a clay-like behaviour) is preferably set between 15 minutes and 3 days. These setting times depends on the type of binder, the amount of binder, retarding agent and initiator.

## Claims

1. Fluid construction mixture comprising a (i) sludge or tailing material (such as a dredged material), (ii) a binder, (iii) a binder retarding agent, optionally (iv) a foaming agent and optionally (v) a weighting material.

2. Construction mixture according to claim 1, wherein the amount of binder in the mixture, is in the range of about 50 to about 400 kg/m³ sludge, preferably about 75 to about 200 kg/m³ sludge

3. Construction mixture according to claim 1 or 2, wherein the binder is selected from the group consisting of fly ashes, cements and lime-based binders (such as calcium oxide, magnesium oxide silica, ferric oxide, aluminium oxide).

4. Construction mixture according to any one of the preceding claims, wherein the amount of sludge in the construction mixture is at least about 50 % (by volume), preferably 50-98 % (by volume),more preferably about 65-95 % (by volume)

5. Construction mixture according to any one of the preceding claims, wherein the binder retarding agent is present in an effective amount to keep the mixture pumpable for at least 1 day from its preparation, under ambient conditions.

6. Construction mixture according to any one of the preceding claims, wherein the binder retarding agent is selected from the group consisting of polyphosphates, sulphonated naphthalenes and lignosulphonates:

7. Construction mixture according to any one of the preceding claims, wherein the foaming agent is added in an effective amount to cause foaming of the mixture, preferably in an amount of between 0 and about 5 kg/m³.sludge.

8. Construction mixture according to any one of the preceding claims, wherein the foaming agent is selected from the group consisting of alkylsulphonates and nitrogen containing sufactants, preferably a foaming agent selected from sulfohydroxypoly(oxy-1,2-ethandiyl)-C10-C16-alkylether (*e.g*. sodium salt), cocosalkyldimethylaminoxide and sodiumolefin(C14/C16)sulfonate.

9. Construction mixture according to any one of the preceding claims, wherein the weighting materials, is selected from the group consisting of minerals with specific weight that is higher that the average specific weight of the mixture, and preferably from the group consisting of baryte, hematite and magnetite.

10. Construction mixture according to any one of the preceding claims, comprising at least one additive selected from the group consisting of fibres of metal (iron), polymeric fibres, glass fibres, organic fibres, *e.g*. wood, wool, reed, flax.

11. Method for preparing a fluid construction mixture according to any one of the preceding claims comprising mixing a sludge or tailing material, a binder, a binder retarding agent, optionally a foaming agent and optionally a weighting material.

12. Method according to claim 11, wherein undesired macroscopic objects (*e.g*. bricks, bikes and the like, household equipment, packaging materials) are removed from the sludge or tailing material, prior to mixing.

13. Method according to claim 11 or 12, wherein (e.g. oxidizing) organic pollutants are removed from the sludge, the tailing material or the mixture, preferably by aerating.

14. Method for preparing a solid construction material, comprising solidifying a fluid construction mixture according to any of the preceding claims.

15. Method according to claim 14, comprising adding an binder initiator to the fluid construction mixture, thereby causing the solidification of said mixture.

16. Method according to any one of the claims 13-15, wherein the binder initiator is added in an effective amount to cause solidifying within 10 seconds to 3 days after adding, under ambient conditions.

17. Method according to any one of the claims 13-16, wherein the binder initiator is added in an amount of about 25 to about 250 kg/m³ sludge.

18. Method according to any one of the claims 13-17, wherein the binder initiator is selected from the group consisting of water glass and alkaline hydroxides (such as sodium hydroxide, potassium hydroxide and sodium aluminates).

19. Method according to any one of the claims 13-18, wherein after solidifying, the construction material is granulated.

20. Solid construction material (in particular in the form of a brick, a block or a granular material obtainable by a method according any one of the claims 13 to 19.

21. Solid construction material, according to claim 20, having a closed and/or open pores with a porosity up to 75 %.

22. Solid material according to claim 20 or 21 having a water permeability range between 10⁻⁴ m/s and 10⁻¹¹ m/s (according Darcy).

23. Use of a fluid construction mixture as defined in any one of the claims 1-13, or a solid construction material as defined in any one of the claims 14-22 in providing an infrastructural element.

24. Use according to claim 23, wherein the infrastructural element is selected from the group consisting of roads, parkings, airplane-landing strips, quays, seawalls, embankments, dikes, road embankments railway embankments, dams, sound barriers and land reclamation projects.

25. Infrastructural element provided with a pumpable construction mixture as defined in any one of the claims 1-13, or a solid construction material as defined in any one of the claims 14-22.

26. Use of a solid construction material as defined in any one of the claims 14-22 as ballast, in particular as ballast for a ship, counterweights at cranes or ballast material for underwater pipelines or underwater constructions.
